# EUROPEAN PATENT SPECIFICATION

(11) **EP 1 798 830 B1**
(45) Date of publication and mention of the grant of the patent: **30.01.2019**
(21) Application number: 06125982.6
(22) Date of filing: 13.12.2006
(51) Int. Cl.: H02G 3/06

(54) **A DEVICE FOR CONNECTING TOGETHER ELECTRICAL CONDUCTOR INSTALLATION DUCTS**
VORRICHTUNG ZUM VERBINDEN VON KABELKANÄLEN
DISPOSITIF POUR RELIER DES GOULOTTES

(30) Priority: 13.12.2005 SE 0502767
(43) Date of publication of application: 20.06.2007
(73) Proprietor: THORSMAN & CO AB, 611 29 Nyköping (SE)
(72) Inventor: Karlsson, Sebastian, 611 31 Nyköping (SE); Westin, Stefan, 613 35 Oxelösund (SE); Chanaron, Pierre-Francois, 611 62 Nyköping (SE)
(74) Representative: Groth & Co. KB

(56) References cited:
- WO-A2-02/31937
- DE-U- 7 017 412
- GB-A- 1 342 085

## Description

### Technical field

The present invention relates to a duct connecting device comprising a connecting element which is designed to connect together electrical conductor installation ducts in accordance with the preamble of claim 1.

Other aspects of the present invention relate to a jointing element for such a connecting device.

Other aspects of the invention relate to a covering element for such a connecting device.

Other aspects of the present invention relate to a method of connecting electrical conductor installation ducts.

### Background of the invention

Installation ducts of the kind defined in the preamble are either mounted horizontally or vertically and are used to provide an isolated space for the installation and distribution of electrical conductors, telephone lines and data carrying lines in offices, laboratories, hospitals and working locations, etc. The installation ducts are not used solely for supporting electrical conductors, but may also be used for affixing various types of outlets, operating devices and like arrangements which are designed as inserts that can be snapped into an opening in an installation duct.

When electrical lines, telephone lines and data carrying lines shall be spread over wide areas it is necessary to join together such installation ducts at regular intervals. This can often require the person installing the duct to cut ducting into appropriate lengths that suit the configuration of the location in which ducts shall be installed. In order to obtain an installation duct that is classed for single-layer insulated cable it is necessary for the duct to fulfil the encapsulating class IP 40, i.e. it must be protected against solid objects that are greater than 1.0 mm. In order to achieve this, it is necessary for the person installing the duct to be equipped with an effective cutting tool that can provide a fine cut on the ducts. Because time is short, the installer will very seldom use the recommended cutting tool. Instead, the installer will most often cut the ducting with the aid of a handsaw. In order to ensure that the encapsulation class IP 40 is achieved, while, at the same time enabling a stable joint or connection to be obtained quickly, there is desired a duct jointing device which can be fitted and removed simply on repeated occasions and which, at the same time, will cover effectively a poorly made joint. Also desirable is a jointing element which in the event of satisfactory cutting of the installation ducts can be adapted so that solely one jointing element is required to achieve a joint that fulfils the encapsulation class IP 40.
It is earlier known to join together installation ducts with the aid of some form of jointing element. Adhesive tape is often used to cover the resultant joint. When, for instance, a single-layer insulated cable shall be used, safety regulations state that an encapsulation class IP 40 must apply in respect of the installation duct concerned. As the adhesive tape ages it loses its adhesiveness and if the tape can be removed from the duct by simply pulling on the tape, such a joint will not fulfil the requirements of encapsulation class IP 40. Neither can a joint of this type be fitted and removed on repeated occasions.
The document DE 7017412 U discloses a connecting device for connecting two U-shaped installation ducts with each other. Two outside connection elements in the form of clamps, each provided with two legs, cooperate each with an inside element which is protruding through a hole in the installation ducts by a loop into which the connection element is attached.
The document GB 1342085 discloses a coupling means for joining pieces of electrical trunking in an end-to-end relationship. A locking member is engagable with the ends of the ducts and extends perpendicularly with the direction of the joint. The document WO 0231937 discloses a coupling and assembly for a cable routing system with a coupling element having pivotably arranged locking elements which interfere with flanged ends of the ducts.

### Object of the invention

The object of the present invention is to provide a connecting device for mutually connecting electrical conductor installation ducts that can be quickly and readily fitted and removed on repeated occasions, while, at the same time, producing a joint that fulfils the requirements of encapsulation class IP 40, even if an installer has failed to produce a fine and tight joint between two duct sections. Another object is to provide a duct connecting device that includes a jointing element and a join covering element that can be fastened together such as to provide a covering element that cannot be lost or displaced. Another object is to provide a covering element that can be fitted externally of the installation ducts subsequent to mutually meeting installation ducts having been joined together.

### Summary of the invention

These objects are achieved by the present invention as defined in the independent claim 1. Appropriate embodiments of the invention are set forth in the dependent claims.

Thus, there is defined in accordance with the present invention a connecting device for connecting electrical conductor installation ducts, wherein the connecting device includes at least one jointing element that has a first end portion which is intended to be fastened to a first installation duct, and an opposing end portion which is intended to be fastened to a second installation duct such as to mutually connect said first and second installation ducts. Said jointing element is flat plate shaped and that said connecting device includes a covering element which is intended to cover the joint that is established between said mutually connected installation ducts; and in that the covering element is designed to enable it to be shape-bound fastened to a first surface of said at least one jointing element. One of the covering element and the jointing element is provided with at least one projection and the other of the covering element and the jointing element is provided with at least one groove arranged so that the projection can be pushed into the groove in a direction parallel with the direction of the joint.

The advantage offered by the inventive duct connecting device resides in the ability to provide on the installation duct a joint which fulfils the requirements of encapsulation class IP 40. As a result of achieving such an encapsulation class level, it is possible to lay a single-layer insulated cable in the installation ducts. Safety regulations require for allowing single-layer insulated cables to be laid in cable ducts that the ducts provide protection against solid objects that are greater than 1.0 mm, i.e. pursuant to encapsulation class IP 40.

According to another preferred embodiment of the inventive connecting device the covering element is designed so that it can be fastened detachably to the jointing element. This enables one and the same connecting device to be fitted and removed on a number of occasions without requiring its component parts to be replaced on each occasion.

According to another preferred embodiment of the invention, the projection has in a direction transversely to the insertion direction a profile that has a portion which is broader than a portion located closer to said element; and in that the groove has a complementary profile transversely of said insertion direction.

According to another preferred embodiment of the invention the groove is formed by at least two strips projecting out from said element. This enables the extent to which the jointing element shall be pushed into an installation duct to be readily ascertained. It is also easy to bring the projection on the covering element into engagement with the groove defined by the strips. In other words, the covering element can be fitted easily to the jointing element very quickly. For instance, the projection may be provided on the covering element and the groove may be provided on the jointing element.

According to another preferred embodiment of the invention, the projection includes at least one depression and in that the element provided with said groove includes a surface provided with an elevation which is intended to grip in said at least one depression. This enables the covering element to be locked firmly to the jointing element, which is a requirement of the encapsulation class IP 40.

According to another preferred embodiment of the invention, jointing element has a second surface located opposite to said first surface, which second surface is smooth. One advantage afforded by this particular embodiment is that if an installer is successful in producing a good cutting surface on the installation ducts with the aid of his cutting tool, the ducts can be joined together solely by inserting the jointing element with its smooth surface turned towards the joint. In other words, a fine cut will obviate the need for a covering element.

According to another preferred embodiment of the invention, covering element has a generally U-shaped profile which can move along the installation ducts and along the entire joint. The benefit of this preferred embodiment is that the roof of the installation duct is able to pass through the covering element. This obviates the need to cut the roof of respective installation ducts to suit the covering element. Another benefit is that the installer does not need to fit together several parts of a joint covering element, which would otherwise involve time consuming work.

According to another preferred embodiment of the invention, the connecting device includes two jointing elements which each connect a respective side wall of a first insulation duct with corresponding side walls of a second meeting installation duct. This embodiment affords the benefit of establishing a more stable joint.

According to another preferred embodiment, the jointing element includes through-penetrating slots such as to obtain a given resilience. As a result of this resiliency, the jointing element can be readily inserted into an installation duct, by squeezing the jointing element together and thereby avoiding frictional forces that would otherwise occur between the installation duct and the jointing element.

These preferred embodiments of the inventive duct connecting device are set forth in the claims dependent on the accompanying claim 1.

### Brief description of the drawings

The invention will now be described in more detail with reference to exemplifying embodiments thereof and also with reference to the accompanying drawings in which
Fig. 1 is a perspective view of an installation duct that includes a duct connecting device according to the present invention, with a covering element in a non-mounted state;
Fig. 2 is a perspective view of one embodiment of the jointing element of the inventive duct connecting device;
Fig. 3 is a perspective view of one embodiment of the covering element of the inventive connecting device;
Fig. 4 is a perspective view of one variant of a jointing element provided with groove-defining strips and elevations;
Fig. 5 is a perspective view of an inventive connecting device and shows the covering element in an initial stage of fitting the element to the jointing element;
Fig. 6 is a perspective view of an inventive connecting device with the covering element locked to the jointing element;
Fig. 7 is a perspective view of the covering element when fitted over a joint between two installation ducts; and
Fig. 8 is a perspective view of a jointing element fitted in the end of an installation duct.

### Detailed description of the invention

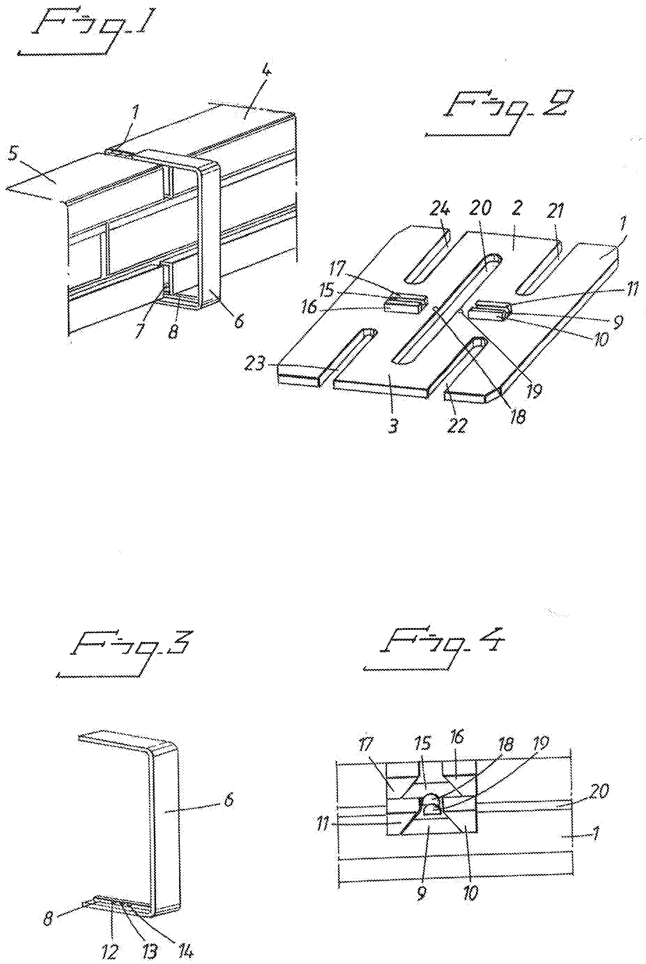

Figures 1-7 illustrate an embodiment of the present invention, applied to a connecting device which is intended to connect together electrical conductor installation ducts. However, it is emphasized that the invention is in no way restricted to connecting devices of this type and that the inventive concept can be applied to various types of duct connecting devices.

Figure 1 is a perspective view of two installation ducts 4, 5 connected by means of a connecting device according to the invention, with the covering element 6 in a non-fitted state. In the case of the illustrated embodiment, the covering element 6 has a U-shaped profile and, when fitted, can extend along the full length of the joint 7 established between two installation ducts 4, 5. In fitting the covering element 6 over the joint 7, the covering element 6 is displaced so as to bring the projection 8 provided on the covering element 6 into engagement with the groove (not shown) in an insertion direction that is parallel with the direction of the joint 7.

Figure 2 illustrates one possible configuration of a jointing element 1. The illustrated jointing element 1 includes two grooves 9, 15, each being formed by two strips 10, 11, 16, 17 that project up from the jointing element. Two elevations 18, 19 are provided between the two grooves 9, 15. These elevations 18, 19 are intended to grip the covering element 6 and therewith effectively lock the covering element 6 to the jointing element 1. In the case of the illustrated embodiment, the jointing element 1 also includes through-penetrating slots 20, 21, 22, 23, 24, which are intended to provide the jointing element 1 with a given resilience, thereby facilitating fitting of the jointing element 1 to the installation ducts 4, 5. By squeezing together the jointing element 1, the end portions 2, 3 of said jointing element (1) can be more easily pushed into respective ends of the installation ducts 4, 5, therewith securely fastening the jointing element 1 to the installation ducts 4, 5. The other surface of the jointing element 1 located opposite to the surface that includes the outwardly projecting strips 10, 11, 16, 17, is beneficially a smooth surface. If the installer has made a fine joint 7 (see figure 1) which does not require the provision of a covering element 6 (see figure 3), the jointing element 1 can be turned so that the smooth surface faces towards the joint 7 between the two installation ducts 4, 5. (This is not shown in the figures)

Figure 3 illustrates an exemplifying embodiment of a cover element 6. The surface of the cover element 6 that is intended to face towards the joint 7 when fitted includes a projection 8 which is intended to be pushed into the grooves 9, 15 (see figure 2) provided on the jointing element 1. In order to obtain a locking action between the jointing element and the cover element 1, 6, the projection 8 is provided with depressions 12, 13, 14 and the jointing element 1 is provided correspondingly with elevations 18, 19 which are intended to grip in the projection 8 (see also figure 2) and its depressions 12, 13, 14.

Figure 4 illustrates an example of how two pairs of strips 10, 11, 16, 17 that define two grooves 9, 15 in the jointing element 1 may be disposed. Located between the pairs of strips 10, 11, 16, 17 are two elevations 18, 19 which are intended for gripping engagement with the projection 8 on the cover element 6. Figure 4 also shows the provision of a slot 20 located between the two elevations 18, 19 in the case of the illustrated the example.

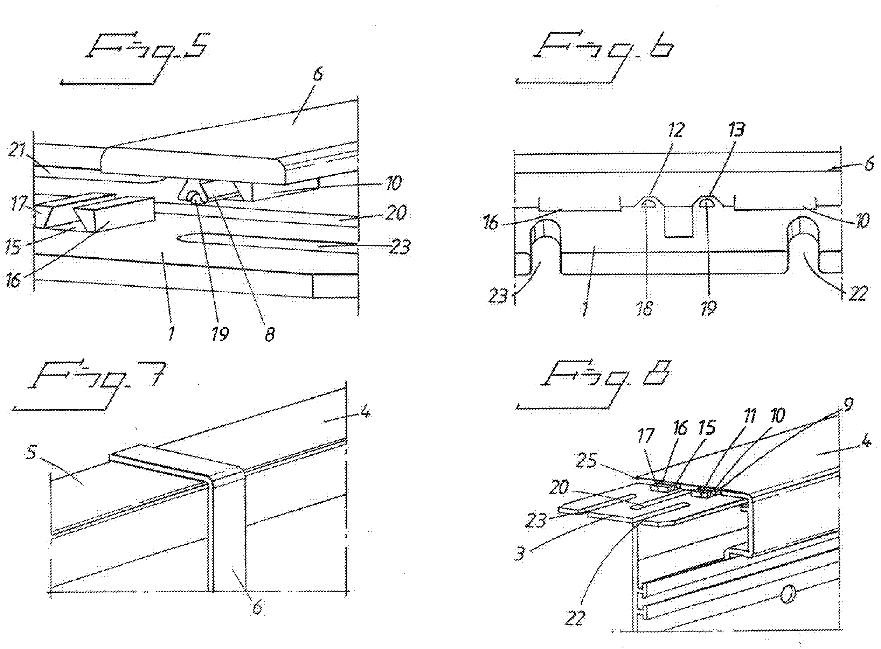

Figure 5 illustrates an example of how a cover element 6 can be fitted to a jointing element 1. In the case of this example, the projection 8 on the cover element 6 has been moved beyond the groove 15 defined by the pairs of strips 16, 17. The figure also shows an example of how the through-penetrating slots 20, 21, 23 in the jointing element may be disposed.

Figure 6 illustrates an inventive duct connecting device when fitted, wherein the cover element 6 is locked to the jointing element 1 by virtue of the elevations 18, 19 on the jointing element 1 being accommodated in the grooves 12, 13 in the cover element 6.

Figure 7 shows the cover element 6 fitted over a join 7 between two mutually connected installations ducts 4, 5. The figure also shows an example of a U-shaped cover element 6 that is able to extend along the entire joint 7.

Figure 8 shows how an end portion 2 of the jointing element 1 has been pushed into the end of an installation duct 4. The end portion 2 of the jointing element 1 has been pushed into the installation duct 4 to an extent such that the edge 25 of the installation duct will receive the strips 10, 16 projecting out from the jointing element 1. This enables the other end portion 3 of the jointing element 1 to be pushed correspondingly into a following installation duct 5. This makes the grooves 9, 15 available, therewith enabling a cover element 6 to be pushed onto the jointing element 1 and locked thereto.

## Claims

1. A connecting device for connecting electrical conductor installation ducts, wherein the connecting device includes at least one jointing element (1) that has a first end portion (2) which is intended to be fastened to a first installation duct (4), and an opposing end portion (3) which is intended to be fastened to a second installation duct (5), the ends portions (2, 3) of the jointing element (1) are arranged to be pushed into respective ends of the installation ducts (4, 5) such as to mutually connect said first and second insulation ducts (4, 5), and said jointing element (1) is mainly flat shaped and that said connecting device comprises a covering element (6) which is intended to cover the joint (7) that is established between said mutually connected installation ducts (4, 5) and the covering element (6) is designed to enable it to be shape-bound fastened to a first surface of said at least one jointing element (1), **characterized in that** one of the covering element (6) and the jointing element (1) is provided with at least one projection (8) and the other of the covering element (6) and the jointing element (1) is provided with at least one groove (9) arranged so that the projection (8) can be pushed into the groove (9) in a direction parallel with the direction of the joint (7).

2. A connecting device according to claim 1, **characterized in that** the projection (8) has in a direction transversely to the insertion direction a profile that has a portion which is broader than a portion located closer to said element; and **in that** the groove (9, 15) has a complementary profile transversely of said insertion direction.

3. A connecting device according to any of the claims 1-2, **characterized in that** the groove (9) is formed by at least two strips (10, 11) projecting out from said element.

4. A connecting device according to any of the claims 1-3, **characterized in that** the projection (8) is provided on the covering element (6); and **in that** the groove (9, 15) is provided on the jointing element (1).

5. A connecting device according to any of the claims 1-4, **characterized in that** the projection (8) includes at least one depression (12, 13, 14); and **in that** the element provided with said groove (9, 15) includes a surface provided with an elevation (18, 19) which is intended to grip in said at least one depression (12, 13, 14).

6. A connecting device according to any one of the preceding claims, **characterized in that** the jointing element (1) has a second surface located opposite to said first surface, which second surface is smooth.

7. A connecting device according to any one of the preceding claims, **characterized in that** the covering element (6) has a generally U-shaped profile which can move along the installation ducts (4, 5) and along the entire joint (7).

8. A connecting device according to any one of the preceding claims, **characterized in that** the connecting device includes two jointing elements which each connect a respective side wall of a first insulation duct (4) with corresponding side walls of a second meeting installation duct (5).

9. A connecting device according to any one of the preceding claims, **characterized in that** the jointing element (1) includes slots (20, 21, 23, 24) such as to obtain a given resilience.

## Patentansprüche

1. Verbindungsvorrichtung zum Verbinden von Installationskanälen für elektrische Leiter, wobei die Verbindungsvorrichtung wenigstens ein Zusammenfügungselement (1) umfasst, das einen ersten Endabschnitt (2), der dazu bestimmt ist, an einem ersten Installationskanal (4) befestigt zu werden, und einen gegenüberliegenden Endabschnitt (3), der dazu bestimmt ist, an einem zweiten Installationskanal (5) befestigt zu werden, aufweist, wobei die Endabschnitte (2, 3) des Zusammenfügungselements (1) so angeordnet sind, dass sie auf eine solche Weise in jeweilige Enden der Installationskanäle (4, 5) geschoben werden, dass sie den ersten und zweiten Installationskanal (4, 5) gegenseitig verbinden, und das Zusammenfügungselement (1) im Wesentlichen flach geformt ist und dass die Verbindungsvorrichtung ein Abdeckelement (6) umfasst, das dazu bestimmt ist, die Verbindungsstelle (7), die zwischen den gegenseitig verbundenen Installationskanälen (4, 5) hergestellt ist, abzudecken, und das Abdeckelement (6) dazu ausgelegt ist, zu ermöglichen, dass es formschlüssig an einer ersten Fläche des wenigstens einen Zusammenfügungselements (1) befestigt zu sein, **dadurch gekennzeichnet, dass** eines des Abdeckelements (6) und des Zusammenfügungselements (1) mit wenigstens einem Vorsprung (8) versehen ist und das andere des Abdeckelements (6) und des Zusammenfügungselements (1) mit wenigstens einer Nut (9) versehen ist, die so angeordnet ist, dass der Vorsprung (8) in einer parallel zu der Richtung der Verbindungsstelle (7) verlaufenden Richtung in die Nut (9) geschoben werden kann.

2. Verbindungsvorrichtung nach Anspruch 1, **dadurch gekennzeichnet, dass** der Vorsprung (8) eine Richtung aufweist, die quer zu der Einsetzrichtung eines Profils aufweist, das einen Abschnitt aufweist, der breiter als ein Abschnitt ist, der sich näher an dem Element befindet, und dass die Nut (9, 15) ein zu der Einsetzrichtung quer verlaufendes komplementäres Profil aufweist.

3. Verbindungsvorrichtung nach einem der Ansprüche 1 bis 2, **dadurch gekennzeichnet, dass** die Nut (9) durch wenigstens zwei Leisten (10, 11) gebildet ist, die von dem Element vorstehen.

4. Verbindungsvorrichtung nach einem der Ansprüche 1 bis 3, **dadurch gekennzeichnet, dass** der Vorsprung (8) auf dem Abdeckelement (6) vorgesehen ist und dass die Nut (9, 15) an dem Zusammenfügungselement (1) vorgesehen ist.

5. Verbindungsvorrichtung nach einem der Ansprüche 1 bis 4, **dadurch gekennzeichnet, dass** der Vorsprung (8) wenigstens eine Ausnehmung (12, 13, 14) umfasst und dass das mit der Nut (9, 15) versehene Element eine Fläche umfasst, die mit einer Erhöhung (18, 19) versehen ist, die dazu bestimmt ist, mit der wenigstens einen Ausnehmung (12, 13, 14) einzugreifen.

6. Verbindungsvorrichtung nach einem der vorhergehenden Ansprüche, **dadurch gekennzeichnet, dass** das Zusammenfügungselement (1) eine zweite Fläche aufweist, die sich gegenüber der ersten Fläche befindet, wobei die zweite Fläche glatt ist.

7. Verbindungsvorrichtung nach einem der vorhergehenden Ansprüche, **dadurch gekennzeichnet, dass** das Abdeckelement (6) ein im Allgemeinen U-förmiges Profil aufweist, das sich entlang den Installationskanälen (4, 5) und entlang der gesamten Verbindungsstelle (7) bewegen kann.

8. Verbindungsvorrichtung nach einem der vorhergehenden Ansprüche, **dadurch gekennzeichnet, dass** die Verbindungsvorrichtung zwei Zusammenfügungselemente umfasst, die jeweils eine entsprechende Seitenwand eines ersten Installationskanals (4) mit entsprechenden Seitenwänden eines zweiten mit demselben zusammentreffenden Installationskanals (5) verbinden.

9. Verbindungsvorrichtung nach einem der vorhergehenden Ansprüche, **dadurch gekennzeichnet, dass** das Zusammenfügungselement (1) Schlitze (20, 21, 23, 24) umfasst, um zum Beispiel eine vorgegebene Nachgiebigkeit zu erreichen.

## Revendications

1. Dispositif de connexion pour connecter des conduits d'installation de conducteurs électriques, dans lequel le dispositif de connexion comprend au moins un élément de jonction (1) qui présente une première partie d'extrémité (2) qui est destinée à être attachée à un premier conduit d'installation (4), et une partie d'extrémité opposée (3) qui est destinée à être attachée à un second conduit d'installation (5), les parties d'extrémité (2, 3) de l'élément de jonction (1) sont agencées de manière à être poussées dans des extrémités respectives des conduits d'installation (4, 5) de manière à connecter mutuellement lesdits premier et second conduits d'installation (4, 5), et ledit élément de jonction (1) est principalement de forme plate et ledit dispositif de connexion comprend un élément de couverture (6) qui est destiné à couvrir le joint (7) qui est établi entre lesdits conduits d'installation connectés mutuellement (4, 5), et l'élément de couverture (6) est conçu de manière à lui permettre d'être attaché par emboîtement à une première surface dudit au moins un élément de jonction (1), **caractérisé en ce qu'**un premier élément parmi l'élément de couverture (6) et l'élément de jonction (1) est pourvu d'au moins une saillie (8), et l'autre élément parmi l'élément de couverture (6) et l'élément de jonction (1) comporte au moins une rainure (9) qui est agencée de telle sorte que la saillie (8) puisse être poussée dans la rainure (9) dans une direction parallèle à la direction du joint (7).

2. Dispositif de connexion selon la revendication 1, **caractérisé en ce que** la saillie (8) présente dans une direction transversalement à la direction d'insertion un profil qui présente une partie qui est plus large qu'une partie située plus près dudit élément; et dans lequel la rainure (9, 15) présente un profil complémentaire transversalement à ladite direction d'insertion.

3. Dispositif de connexion selon l'une quelconque des revendications 1 à 2, **caractérisé en ce que** la rainure (9) est formée par au moins deux bandes (10, 11) qui font saillie à partir dudit élément.

4. Dispositif de connexion selon l'une quelconque des revendications 1 à 3, **caractérisé en ce que** la saillie (8) est prévue sur l'élément de couverture (6); et **en ce que** la rainure (9, 15) est prévue sur l'élément de jonction (1).

5. Dispositif de connexion selon l'une quelconque des revendications 1 à 4, **caractérisé en ce que** la saillie (8) comprend au moins une dépression (12, 13, 14); et **en ce que** l'élément pourvu de ladite rainure (9, 15) présente une surface pourvue d'une élévation (18, 19) qui est destinée à se caler dans ladite au moins une dépression (12, 13, 14).

6. Dispositif de connexion selon l'une quelconque des revendications précédentes, **caractérisé en ce que** l'élément de jonction (1) présente une seconde surface située en face de ladite première surface, ladite seconde surface étant lisse.

7. Dispositif de connexion selon l'une quelconque des revendications précédentes, **caractérisé en ce que** l'élément de couverture (6) présente un profil essentiellement en forme de U qui peut se déplacer le long des conduits d'installation (4, 5) et le long de la totalité du joint (7).

8. Dispositif de connexion selon l'une quelconque des revendications précédentes, **caractérisé en ce que** le dispositif de connexion comprend deux éléments de jonction qui connectent chacun une paroi latérale respective d'un premier conduit d'installation (4) à des parois latérales correspondantes d'un second conduit d'installation approprié (5).

9. Dispositif de connexion selon l'une quelconque des revendications précédentes, **caractérisé en ce que** l'élément de jonction (1) comporte des fentes (20, 21, 23, 24) de manière à obtenir une élasticité donnée.
